# EUROPÄISCHE PATENTSCHRIFT

(11) **EP 2 227 414 B1**
(45) Veröffentlichungstag und Bekanntmachung des Hinweises auf die Patenterteilung: **29.06.2011**
(21) Anmeldenummer: 08803188.5
(22) Anmeldetag: 25.08.2008
(51) Int. Cl.: B64D 11/04, A47B 91/02

(54) **VORRICHTUNG ZUR WERKZEUGLOSEN HÖHENVERSTELLUNG EINER BAUGRUPPE**
DEVICE FOR HEIGHT ADJUSTMENT OF AN ASSEMBLY GROUP WITHOUT TOOLS
DISPOSITIF POUR RÉGLER EN HAUTEUR SANS OUTIL UN SOUS-ENSEMBLE

(30) Priorität: 30.11.2007 DE 102007057617; 30.11.2007 US 4827
(43) Veröffentlichungstag der Anmeldung: 15.09.2010
(73) Patentinhaber: Airbus Operations GmbH, 21129 Hamburg (DE)
(72) Erfinder: STOOB, Melanie, 21079 Hamburg (DE); SCHMIDT-KORTENBUSCH, Benedikt, 22529 Hamburg (DE); ISCHDONAT, Nils, 22455 Hamburg (DE); BENSE, Rolf, 21635 Jork (DE)
(74) Vertreter: Peckmann, Ralf
(86) Internationale Anmeldenummer: PCT/EP2008/061070
(87) Internationale Veröffentlichungsnummer: WO 2009/068331

(56) Entgegenhaltungen:
- WO-A-00/55510
- WO-A-2005/095209
- JP-A- 2006 241 930
- US-A- 194 582
- US-A- 4 456 206
- US-A- 5 427 349

## Beschreibung

Die Erfindung betrifft eine Vorrichtung mit einer Grundplatte und einem Auflager zur werkzeuglosen Höhenjustierung einer Baugruppe, insbesondere eines Küchenmoduls in einem Flugzeug.

Moderne Passagierflugzeuge verfügen über Bordküchen, die von externen Ausrüstern und Zulieferern vorgefertigt angeliefert werden. Beim Einbau ist in der Regel ein Toleranzausgleich zwischen dem Bordküchenhalter und dem Bordküchenmodul aufgrund unvermeidbarer Fertigungstoleranzen vorzunehmen. Bei anderen in der Rumpfzellenstruktur zu verbauenden, vorgefertigten Modulen bzw. Baugruppen zeigt sich in der Regel dieselbe Problematik.

Zurzeit erfolgt der erforderliche Toleranzausgleich, insbesondere der Höhenausgleich, durch so genannte "Shimscheiben", das heißt flächenhafte Zulagen bzw. Unterlegscheiben mit gleicher oder jeweils unterschiedlicher Dicke.
Diese Vorgehensweise ist aufwändig, da eine Vielzahl von "Shimscheiben" mit unterschiedlicher Materialstärke zwischen dem Bordküchenhalter und der Bordküche eingelegt und gegebenenfalls auch miteinander kombiniert werden müssen, um die richtige Sollhöhe einzustellen. Nach dem Einlegen und Positionieren einer oder mehrerer "Shimscheiben" werden die Befestigungsschrauben der Bordküche angezogen, damit diese in die richtige, endgültige Lage kommt. Anschließend erfolgt eine Kontrolle, ob die Höhenjustierung den Vorgaben entspricht. Ist dies nicht der Fall, muss die Prozedur mit einer anderen "Shimscheibe" oder einer Kombination von "Shimscheiben" wiederholt werden, wobei die Befestigungsschrauben der Bordküche erneut zu lösen sind. Ferner erfordert diese Technik die Bereitstellung eines umfangreichen Vorrats an unterschiedlichen Ausgleichsscheiben im Einbaubereich, wobei zusätzlich aus flugsicherheitstechnischen Gründen genauestens darauf geachtet werden muss, dass keine Teile während der Montage in der Struktur verloren gehen. Schließlich ist eine werkzeuglose Montage unter Verwendung von "Shimscheiben" sowie eine stufenlose Höhenverstellung nicht möglich.
Alternativ ist es möglich, den Höhenausgleich durch das Verdrehen von vertikalen Gewindebuchsen zu bewirken. Hierbei ist zwar eine stufenlose Höheneinstellung möglich, doch sind zur Justierung spezielle Werkzeuge erforderlich. Um eine gröβere Höhendifferenz zu kompensieren, ist unter Umständen eine erhebliche Anzahl von Umdrehungen der Gewindebuchse erforderlich.
US 5 427 349 A offenbart eine Vorrichtung zur Höhenjustierung mit den Merkmalen des Oberbegriffs des Anspruchs 1.
Aufgabe der Erfindung ist es, eine Vorrichtung zur Höhenjustierung von Baugruppen in Flugzeugen bereitzustellen, die eine schnelle und werkzeuglose und im Wesentlichen stufenlose Höheneinstellung der Baugruppe beim Einbau in eine Rumpfzellenstruktur eines Flugzeugs ohne verlierbare Teile erlaubt.

Diese Aufgabe wird durch eine Vorrichtung mit den Merkmalen des Patentanspruchs 1 gelöst.

Dadurch, dass zwischen der Grundplatte und dem Auflager zwei gegenläufige Keilkörper zur Höhenjustierung verschiebbar geführt angeordnet sind und die Keilkörper gegenüber Verschiebungen parallel zu einer Längsachse sicherbar sind, ergibt sich eine schnelle und vor allem werkzeuglose bzw. händische Höhenverstellbarkeit, die mit einem Griff eines Benutzers erfolgen kann. Durch die entgegengesetzt bewegten Keilkörper stellt sich zudem ein vorteilhaftes Übersetzungsverhältnis ein, so dass relativ kleine horizontale Bewegungen in hierzu nahezu proportionale Vertikalbewegungen transformiert werden, auf der anderen Seite aber keine zu hohen Betätigungskräfte für die Höhenverstellung aufzubringen sind.

Die jeweils eingestellte horizontale Position der Keilkörper wird durch Sicherungsmittel verhindert, so dass unkontrollierte Verschiebungen und damit eine Höhenveränderung der Vorrichtung ausgeschlossen sind.

Gemäss Ansprusch 1 weist eine Oberseite der im Wesentlichen rechteckförmigen Grundplatte zumindest bereichsweise eine Grundplattenverzahnung auf.
Hierdurch wird eine unkontrollierte Verschiebung der Keilkörper verhindert.

Nach Maßgabe einer weiteren vorteilhaften Ausgestaltung der Vorrichtung weist eine Oberseite der Grundplatte zumindest bereichsweise eine Feder, insbesondere eine schwalbenschwanzförmige Feder auf, die in jeweils im Bereich von Unterseiten der Keilkörper angeordnete Nuten, insbesondere schwalbenschwanzförmige Nuten, einbringbar ist, derart, dass jeder Keilkörper parallel zur Längsachse der Grundplatte verschiebbar geführt ist.
Durch die Führung der Keilkörper auf der Grundplatte mittels einer insbesondere schwalbenschwanzförmig ausgeführten Nut- und Federverbindung ergibt sich ein geringes mechanisches Spiel bei einer gleichzeitig hohen Belastbarkeit in vertikaler Richtung und einer dennoch leichten horizontalen Verschiebbarkeit. Ferner können die Keilkörper nicht von der Grundplatte abgehoben werden. Schließlich ist es möglich, die Grundplatte und beide Keilkörper zum Beispiel mittels konventioneller spangebender Verfahren einstückig aus einem einzigen Materialblock herauszuarbeiten.

Nach einer Weiterbildung ist vorgesehen, dass in jedem Keilkörper ein quer zur Längsachse händisch verschwenkbarer Rasthebel aufgenommen ist, wobei jeder Rasthebel im Bereich einer Unterseite zumindest bereichsweise eine Rasthebelverzahnung aufweist.
Durch das Ineinandergreifen von Rasthebelverzahnung und Grundplattenverzahnung bei herunter gedrücktem Rasthebel ist eine unkontrollierte horizontale Verschiebung der Keilkörper und damit eine Veränderung der Höhenjustierung ohne aktives Anheben der Rasthebel ausgeschlossen. Daneben erlaubt die Verzahnung der Grundplatte und der Rastkörper eine nahezu stufenlose bzw. sehr fein gestufte Höhenversteilbarkeit der Vorrichtung. Beim Einbau einer Baugruppe werden zur Höhenverstellung die Rasthebel angehoben und die Keilkörper solange entgegengesetzt zueinander hin und her bewegt, bis die Höhenjustierung erfolgt. Durch das anschließende Herunterdrücken beider Rasthebel werden die Keilkörper durch die ineinandergreifende Grundplattenverzahnung und die Rasthebelverzahnung in ihrer jeweiligen Position gesichert.

Nach Maßgabe einer weiteren vorteilhaften Ausgestaltung der Vorrichtung sind die Rasthebel jeweils mittels einer Feder vorgespannt.
Hierdurch werden die unterseitigen Verzahnungen der Rasthebel im nicht angehobenen, das heißt herunter gedrückten Zustand durch die Wirkung der Federkraft fest in die Grundplattenverzahnung hinein gedrückt, so dass eine ungewollte Verstellung der Keilkörperpositionen auch beim Einwirken äußerer Kräfte weitgehend ausgeschlossen ist. Durch eine Vergrößerung der jeweils ineinandergreifenden Verzahnungen (Grundplattenverzahnung, Rasthebelverzahnung) kann die Widerstandskraft der Verrastung gegenüber der Einwirkung von äußeren Kräften erhöht werden. Als Federn können beispielsweise Schraubenfedern, Spiralfedern, Blattfedern, Schraubenfedern mit zwei v-förmig angeordneten Federschenkeln oder dergleichen Verwendung finden.

Weitere vorteilhafte Ausgestaltungen der Vorrichtung sind in den weiteren Patentansprüchen dargelegt.

In der Zeichnung zeigt:
- **Fig. 1**: Eine perspektivische Darstellung der Vorrichtung mit allen wesentlichen Einzelkomponenten,
- **Fig. 2**: eine perspektivische Ansicht der montierten Vorrichtung, und
- **Fig. 3**: eine perspektivische Innenansicht eines Teils der Vorrichtung.

In der Zeichnung weisen dieselben konstruktiven Elemente jeweils die gleiche Bezugsziffer auf.

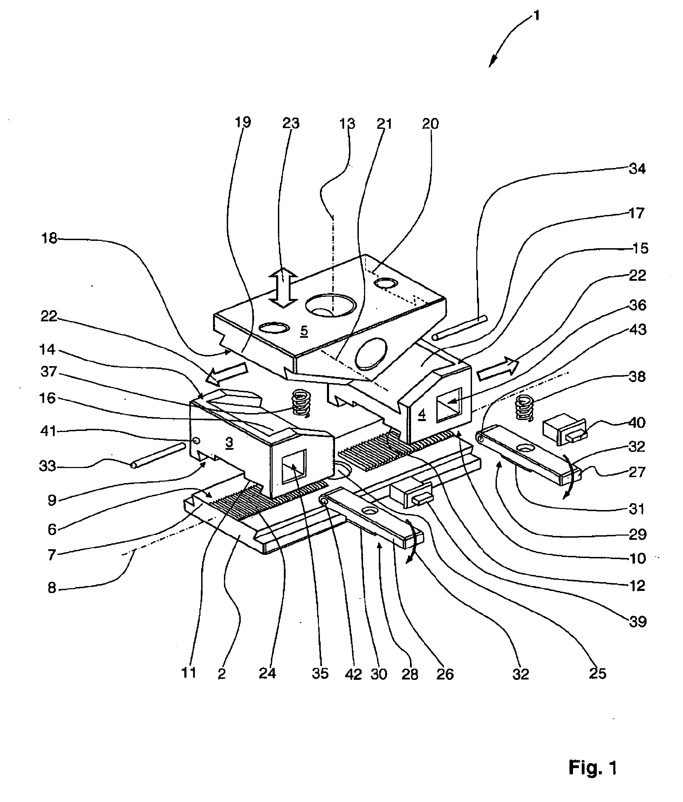

Die **Fig. 1** zeigt eine perspektivische Explosionsdarstellung eines Ausführungsbeispiels der Vorrichtung zur Höhenjustierung von Baugruppen.
Eine erfindungsgemäße Vorrichtung 1 zur Höhenjustierung von Baugruppen umfasst unter anderem eine im Wesentlichen rechteckförmige Grundplatte 2, zwei Keilkörper 3,4 und ein Auflager 5. Eine Oberseite 6 der Grundplatte 2 ist beispielsweise mit einer bevorzugt schwalbenschwanzförmig ausgebildeten Feder 7 versehen, die parallel zu einer Längsachse 8 verläuft. Jeder der beiden Keilkörper 3,4 weist im Bereich einer Unterseite 9,10 eine korrespondierend zur Feder 7 ausgebildete, vorzugsweise schwalbenschwanzförmige Nut 11,12 auf. Durch die schwalbenschwanzförmigen Nuten 11,12 sind die Keilkörper 3,4 jeweils parallel zur Längsachse 8 auf der Feder 7 der Grundplatte 2 verschiebbar geführt. Ein Abheben der so geführten Keilkörper 3,4 parallel zu einer Hochachse 13 ist ausgeschlossen und damit eine sichere und leichtgängige Führung der Keilkörper 3,4 auf der Grundplatte 2 gewährleistet. In beide Oberseiten 14,15 der Keilkörper 3,4 ist jeweils eine gleichfalls bevorzugt schwalbenschwanzförmige Nut 16,17 eingebracht. Die Nuten 16,17 sind erfindungsgemäß jeweils um einen Winkel zwischen 10° und 40° in Relation zur Längsachse 8 geneigt ausgebildet, wobei die Nuten 16,17 in beiden Keilkörpern 3,4 jeweils entgegengesetzt geneigt sind, das heißt die Keilkörper 3,4 sind spiegelsymmetrisch zueinander ausgestaltet.

Eine Unterseite 18 des Auflagers 5 weist ebenfalls zwei bevorzugt schwalbenschwanzförmig ausgebildete Federn 19,20 auf, die korrespondierend zu den schwalbenschwanzförmigen Nuten 16,17 der Keilkörper 3,4 ausgestaltet und in diese zumindest bereichsweise formschlüssig einbringbar sind. Die unter einem Neigungswinkel in einem Bereich zwischen 10° und 40° verlaufenden Federn 19,20 sind entgegengesetzt geneigt, derart, dass sich die Federn 19,20 im Bereich einer Mittellinie 21 des Auflagers 5 treffen. Die geometrische Gestalt des Auflagers 5 entspricht in etwa der eines auf dem Kopf stehenden, v-förmigen Daches. Die Neigungswinkel der Federn 19,20 des Auflagers 5 korrespondieren jeweils mit Neigungswinkeln der Nuten 16,17 in den Keilkörpern 3,4. Durch gleichzeitiges Verschieben beider Keilkörper 3,4 in Richtung oder entgegen der Orientierung der Pfeile 22 erfolgt in Verbindung mit den geneigten Nuten 16,20 bzw. den Federn 19,20 die Umsetzung der entgegengesetzt horizontalen Bewegung der Keilkörper 3,4 in eine vertikale Bewegung des Auflagers 5 in Richtung des Pfeils 23 zur Höhenjustierung einer - nicht dargestellten - auf dem Auflager 5 befestigten Baugruppe, beispielsweise eines Küchenmoduls oder dergleichen. Die Grundplatte 2 ist beispielsweise mit einem nicht dargestellten Fußbodengerüst einer Rumpfzellenstruktur eines Flugzeugs bzw. einem Küchenträger verbunden.
Alternativ zur Führung der Keilkörper 3,4 zwischen der Grundplatte 2 und dem Auflager 5 mittels einer Schwalbenschwanzführung kann jede geeignete alternative Linearführung, wie beispielsweise eine Längsführung mittels Stangen und darauf geführten Gleitbuchsen, Linearkugellager oder dergleichen eingesetzt werden. Die lediglich beispielhaft gezeigte Schwalbenschwanzführung weist jedoch den entscheidenden Vorteil auf, dass sie mit einem Minimum an Teilen realisierbar ist, da sowohl die Keilkörper 3,4 als auch die Grundplatte 2 und das Auflager 5 einstückig aus einem Vollmaterial, wie beispielsweise aus einem Block geeigneter Größe aus einer leicht CNC-bearbeitbaren Aluminiumlegierung, spanend herausgearbeitet werden können.

Um die Keilkörper 3,4 gegen unkontrollierte Verschiebungen parallel zur Längsachse 8 zu sichern, weist die Grundplatte 2 zumindest bereichsweise eine Grundplattenverzahnung 24 auf. Die Grundplattenverzahnung 24 erstreckt sich über die gesamte Längenausdehnung der Grundplatte 2 beidseitig der Längsachse 8, wobei lediglich ein Bereich für eine Befestigungsbohrung 25 in der Grundplatte 2 ausgespart ist. Weiterhin sind zwei auf- und abschwenkbare Rasthebel 26,27, die im Bereich einer Unterseite 28,29 mit einer Rasthebelverzahnung 30,31 versehen sind, vorhanden. Die Rasthebelverzahnungen 30,31 werden mit der Grundplattenverzahnung 24 in Eingriff gebracht, wenn die Rasthebel 26,27 durch einen Benutzer in Richtung der Pfeile 32 nach unten gedrückt werden. Die beiden Rasthebel 26,27 sind mittels der Bolzen 33,34 verschwenkbar in den Ausnehmungen 35,36 innerhalb der Keilkörper 3,4 aufgenommen bzw. gelagert. Um sicherzustellen, dass sich die Rasthebelverzahnungen 30,31 in einer "Sicherungsstellung" stets mit der Grundplattenverzahnung 24 zur Sicherung der Keilkörper 3,4 im Eingriff befinden, sind beide Rasthebel 26,27 vorzugsweise jeweils mittels einer (Druck-)Zylinderfeder 37,38 bzw. einer (Druck-)Schraubenfeder vorgespannt. Alternativ können bei einer entsprechenden konstruktiven Anbindung der Rasthebel 26,27 in den Keilkörpern 3,4 Spiralfedern, Blattfedern, Schraubenfedern mit zwei v-förmig angeordneten Federschenkeln, jeweils in Druck- oder Zugausführung, eingesetzt werden. Eine nicht näher bezeichnete, im Wesentlichen quadratische Querschnittsfläche der Ausnehmungen 35,36 ist so bemessen, dass die Rasthebel 26,27 von einem Benutzer soweit nach oben - entgegen der Richtung des Pfeils 32 - geschwenkt werden können, dass sich die Rasthebelverzahnungen 30,31 nicht mehr mit der Grundplattenverzahnung 24 im Eingriff befinden, sondern hiervon abgehoben sind. In dieser so genannten "Justierstellung" können die Keilkörper 3,4 ohne die Zuhilfenahme eines Werkzeugs per Hand parallel zur Längsachse 8 verschoben werden, um die Höhenjustierung des Auflagers 5 zu bewirken. Werden beide Keilkörper 3,4 nach außen verschoben, so senkt sich das Auflager 5 ab, während es bei der umgekehrten Bewegung der Keilkörper 3,4 zur Anhebung des Auflagers 5 parallel zur Hochachse 13 kommt.
Hat das Auflager 5 die vorgesehene Höhe erreicht, lässt der Benutzer einfach die Rasthebel 26,27 los. Hierdurch schwenken die Rasthebel 26,27 durch die Wirkung der Zylinderfedern 37,38 selbsttätig in Richtung der Pfeile 32 in ihre "Sicherungsstellung" zurück, in der sich beide Rasthebelverzahnungen 30,31 zumindest bereichsweise formschlüssig im Eingriff mit der Grundplattenverzahnung 24 befinden und jegliche horizontalen Verschiebungen der beiden Keilkörper 3,4 ausgeschlossen sind.

Sowohl die Grundplattenverzahnung 24 als auch die Rasthebelverzahnungen 30,31 sind mit einer hinreichend feinen, bevorzugt prismatischen Verzahnung mit einer Vielzahl von kleinen Zähnen gebildet, die im relevanten Höhenausgleichsbereich der Vorrichtung 1 eine praktisch nahezu stufenlose Höhenverstellung bei einer gleichzeitig sicheren Arretierung der Keilkörper 3,4 erlaubt. Die nicht mit einer Bezugsziffer versehenen Zähne der Grundplattenverzahnung 24 sowie der Rasthebelverzahnungen 30,31 weisen jeweils eine etwa dreieckförmige Querschnittsgeometrie mit einer Höhe von beispielsweise bis zu 1 mm und einer Breite der Grundseite von bis zu 2 mm auf (Querschnittsgeometrie in der Form eines gleichseitigen Dreiecks), wobei die Längsachsen der Zähne jeweils quer zur Längsachse 8 verlaufen. Andere geometrische Gestaltungen der Zahngeometrie sind gleichfalls möglich.

Im abgesenkten Zustand der Rasthebel 26,27 werden schließlich noch zwei Stopfen 39,40 oberhalb der beiden Rasthebel 26,27 mit leichtem Pressschluss in die Ausnehmungen 35,36 als zusätzliches Sicherungsmittel eingedrückt, so dass ein Hochschwenken der Rasthebel 26,27 und damit jede unkontrollierte Höhenverstellung der Vorrichtung 1 ausgeschlossen ist. Darüberhinaus gewährleisten die Stopfen 39,40 Schutz vor dem Eindringen von Feuchtigkeit und Schmutzpartikeln in die Vorrichtung 1 und gewährleisten somit eine jederzeit leichte Betätigbarkeit der Vorrichtung 1.
Die Rasthebel 26,27 sind auf zwei Bolzen 33,34 verschwenkbar gelagert, wobei die Bolzen 33,34 jeweils in einer Bohrung innerhalb der Keilkörper 3,4 gelagert sind. Von den beiden Bohrungen trägt lediglich eine Bohrung 41 im ersten, vorderen Keilkörper 3 stelivertretend für die verdeckte Bohrung im zweiten, hinteren Keilkörper 4 eine Bezugsziffer. Die Rasthebel 26,27 weisen im Bereich ihrer hinteren Enden jeweils eine durchgehende Bohrung 42,43 zur Durchführung der Bolzen 33,34 auf.

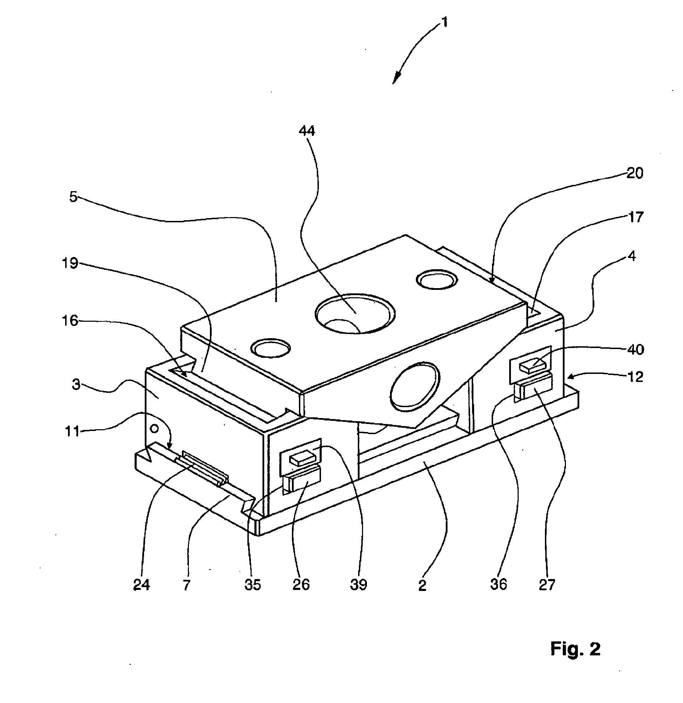

Die **Fig. 2** zeigt die Vorrichtung in einer perspektivischen Ansicht im montierten Zustand.
Die Keilkörper 3,4 der Vorrichtung 1 mit ihren unterseitigen schwalbenschwanzförmigen Nuten 11,12 sind auf der Feder 7 mit der Grundplattenverzahnung 24 der Grundplatte 2 geführt, während das Auflager 5 mit seinen beiden unterseitigen Federn 19,20 in den oberseitigen Nuten 16,17 der beiden Keilkörper 3,4 verschiebbar aufgenommen ist. Die Rasthebel 26,27 befinden sich in der Darstellung der Fig. 2 in der "Sicherungsstellung", in der die Stopfen 39,40 in die Ausnehmungen 35,36 eingedrückt bzw. eingesteckt sind und eine horizontale Verschiebung der Keilkörper 3,4 ausgeschlossen ist. Infolge der leichten Presspassung zwischen den Stopfen 39,40 und den Ausnehmungen 35,36 sind diese selbst gegen Herausfallen gesichert. Die Stopfen 39,40 können weiterhin durch nicht dargestellte Sicherungsbänder unverlierbar beispielsweise mit der Grundplatte 2 oder den Keilkörpern 3,4 verbunden sein. In das Auflager 5 ist mindestens eine vorzugsweise mittig angeordnete zentrale Befestigungsbohrung 44 eingebracht, die zur Anbindung der nicht dargestellten Baugruppe oder zu befestigenden Funktionsmodule, beispielsweise in der Gestalt eines Küchenmoduls oder dergleichen dient, dessen Höhenjustierung mittels der Vorrichtung 1 stufenlos variiert werden soll.

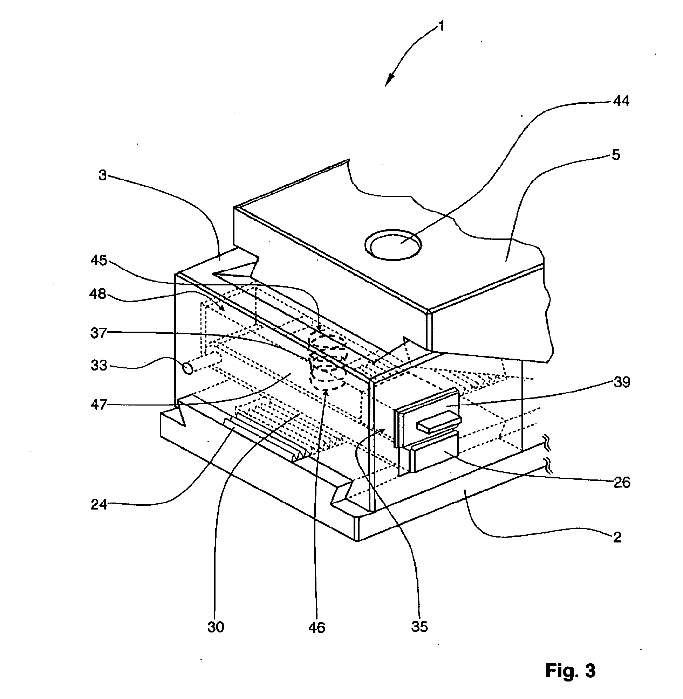

Die **Fig. 3** zeigt eine perspektivische (Teilinnen-)Ansicht des linksseitigen Keilkörpers 3 der Vorrichtung im zusammengebauten Zustand, dem der innere Aufbau des hierzu spielgelbildlich aufgebauten Keilkörpers 4 entspricht. Auf der Grundplatte 2 ist der linke Keilkörper 3 horizontal verschiebbar in bekannter Weise in der Schwalbenschwanzführung aufgenommen.

Durch die Wirkung der Zylinderfeder 37 wird der Rasthebel 26 nach unten gedrückt und in dieser Position ("Sicherungsstellung") festgehalten, so dass die Grundplattenverzahnung 24 mit der Rasthebelverzahnung 30 in Eingriff gebracht wird und horizontale Verschiebungen des Keilkörpers 3 ausgeschlossen sind. Damit ist eine unkontrollierte, selbsttätige Anhebung bzw. Absenkung des Auflagers 5 unmöglich.
Zur Höhenjustierung des Auflagers 5 entfernt ein Anwender die Stopfen 39,40, hebt beide Rasthebel 26,27 werkzeuglos mit den Fingern bis zum Erreichen der "Justierstellung" an, führt die Stopfen 39,40 unter die Rasthebel 26,27 in die Ausnehmungen 35,36 ein, wodurch diese ohne weiteres Zutun in der angehobenen Stellung gehalten werden, und verschiebt die Keilkörper 3,4 gegenläufig auf der Grundplatte 2, bis die ordnungsgemäße Höheneinstellung der Vorrichtung 1 gefunden ist. Durch die mittels der Stopfen 39,40 in der angehobenen Position gehaltenen Rasthebel 26,27 behält der Benutzer bei der Montage beide Hände zur Höhenjustierung frei. Ist die vorgesehene Höheneinstellung gefunden, kehren, nachdem der Benutzer die Stopfen 39,40 aus den Ausnehmungen 35,36 durch Herausziehen entfernt hat, beide Rasthebel 26,27 wieder selbsttätig in die "Sicherungsstellung" zurück. Durch das Eindrücken der Stopfen 39,40 oberhalb der Rasthebel 26,27 in die Ausnehmungen 35,36 können diese abschließend in der "Sicherungsstellung" festgesetzt werden. Zudem verhindern die Stopfen 39,40 die Entwicklung von Klappergeräuschen im Fall von Schwingungen oder Vibrationen.

Beide Enden der Zylinderfeder 37 sind in jeweils gegenüberliegenden Bohrungen 45,46 geringer Tiefe, die jeweils in einem mittleren Bereich einer Oberseite 47 des Rasthebels 26 und im Bereich einer Deckenfläche 48 der Ausnehmung 35 im Keilkörper 3 eingebracht sind, aufgenommen und hierdurch gegen seitliches Verrutschen gesichert. Der Rasthebel 26 ist mittels des Bolzens 33 innerhalb des ersten Keilkörpers 3 verschwenkbar gelagert. Jede Aufwärtsbewegung des Rasthebels 26 ist in der in Fig. 3 illustrierten "Sicherungsstellung" durch den in die Ausnehmung 35 eingesteckten Stopfen 39 blockiert. Die Lagefixierung der Zylinderfeder 38 im Rasthebel 27 und der Ausnehmung 36 (und dessen Lagerung im rechten Keilkörper 4, nicht dargestellt in der Fig. 3) erfolgen in analoger Weise (vgl. insb. Fig. 1).

Durch die erfindungsgemäße Vorrichtung 1 ist es für den Höheneinstellungsvorgang nicht mehr erforderlich, die (Schraub-)Verbindung zwischen dem Auflager 5 und einer darauf befestigten, nicht dargestellten Baugruppe, wie zum Beispiel einem Küchenmodul, während der Einstellprozedur zu lösen und anschließend wieder festzuziehen. Dasselbe gilt für die Befestigung der Grundplatte 2 auf einer gleichfalls nicht dargestellten Unterkonstruktion, wie zum Beispiel einem auf einem Fußbodengerüst einer Rumpfzellenstruktur angeordneten Küchenträger, so dass durch den Einsatz der Vorrichtung 1 der Montageaufwand erheblich reduzierbar ist.

### Bezugszeichenliste

- 1: Vorrichtung
- 2: Grundplatte
- 3: Keilkörper (erster)
- 4: Keilkörper (zweiter)
- 5: Auflager
- 6: Oberseite (Grundplatte)
- 7: Feder (Grundplatte)
- 8: Längsachse
- 9: Unterseite (erster Keilkörper)
- 10: Unterseite (zweiter Keilkörper)
- 11: Nut (Unterseite erster Keilkörper)
- 12: Nut (Unterseite zweiter Keilkörper)
- 13: Hochachse
- 14: Oberseite (erster Keilkörper)
- 15: Oberseite (zweiter Keilkörper)
- 16: Nut (Oberseite erster Keilkörper)
- 17: Nut (Oberseite zweiter Keilkörper)
- 18: Unterseite (Auflager)
- 19: Feder
- 20: Feder Auflager
- 21: Mittellinie (Scheitellinie Auflager)
- 22: Pfeil
- 23: Pfeil
- 24: Grundplattenverzahnung
- 25: Befestigungsbohrung (Grundplatte)
- 26: Rasthebel (erster Keilkörper)
- 27: Rasthebel (zweiter Keilkörper)
- 28: Unterseite (Rasthebel)
- 29: Unterseite (Rasthebel)
- 30: Rasthebelverzahnung
- 31: Rasthebelverzahnung
- 32: Pfeil
- 33: Bolzen
- 34: Bolzen
- 35: Ausnehmung (erster Keilkörper)
- 36: Ausnehmung (zweiter Keilkörper)
- 37: Zylinderfeder
- 38: Zylinderfeder
- 39: Stopfen
- 40: Stopfen
- 41: Bohrung (erster Keilkörper)
- 42 43: Bohrung Rasthebel Bohrung
- 44: Befestigungsbohrung (Auflager)
- 45: Bohrung (Lagefixierung Zylinderfeder)
- 46: Bohrung (Lagefixierung Zylinderfeder)
- 47: Oberseite (erster Rasthebel)
- 48: Deckenfläche (erste Ausnehmung)

## Patentansprüche

1. Vorrichtung (1) mit einer Grundplatte (2) und einem Auflager (5) zur händischen Höhenjustierung einer Baugruppe, insbesondere eines Küchenmoduls in einem Flugzeug, wobei zwischen der Grundplatte (2) und dem Auflager (5) zwei gegenläufige Keilkörper (3, 4) zur Höhenjustierung verschiebbar geführt angeordnet sind und die Keilkörper (3, 4) gegenüber Verschiebungen parallel zu einer Längsachse (8) der Grundplatte sicherbar sind, **dadurch gekennzeichnet dass** eine Oberseite (6) der im Wesentlichen rechteckförmigen Grundplatte (2) zumindest bereichsweise eine Grundplattenverzahnung (24) zur Sicherung der Keilkörper (3,4) aufweist.

2. Vorrichtung (1) nach Patentanspruch 1, **dadurch gekennzeichnet, dass** die Oberseite (6) der Grundplatte (2) zumindest bereichsweise eine Feder (7), insbesondere eine schwalbenschwanzförmige Feder aufweist, die in jeweils im Bereich von Unterseiten (9, 10) der Keilkörper (3, 4) angeordnete Nuten (11, 12), insbesondere schwalbenschwanzförmige Nuten, einbringbar ist, derart, dass jeder Keilkörper (3, 4) parallel zur Längsachse (8) der Grundplatte (2) verschiebbar geführt ist.

3. Vorrichtung (1) nach einem der Patentansprüche 1 oder 2, **dadurch gekennzeichnet, dass** in jedem Keilkörper (3, 4) ein quer zur Längsachse (8) händisch verschwenkbarer Rasthebel (26, 27) aufgenommen ist, wobei jeder Rasthebel (26, 27) im Bereich einer Unterseite (28, 29) zumindest bereichsweise eine Rasthebelverzahnung (30, 31) aufweist, die durch Herunterschwenken mit der Grundplattenverzahnung (24) zur Sicherung der jeweiligen Lage der Keilkörper (3, 4) in Eingriff bringbar ist.

4. Vorrichtung (1) nach einem der Patentansprüche 1 bis 3, **dadurch gekennzeichnet, dass** jeder Rasthebel (26, 27) jeweils mittels einer Feder, insbesondere mit einer Zylinderfeder (37, 38) vorgespannt ist, um die jeweilige Rasthebelverzahnung (30, 31) mit der Grundplattenverzahnung (24) im Eingriff zu halten und somit die Lage der Keilkörper (3, 4) auf der Grundplatte (2) zu sichern.

5. Vorrichtung (1) nach einem der Patentansprüche 1 bis 4, **dadurch gekennzeichnet, dass** jeder Rasthebel (26, 27) durch ein Sicherungsmittel, insbesondere einen Stopfen (39, 40), gegen unbeabsichtigtes Hochschwenken und das Eindringen von Schmutzpartikeln gesichert ist.

6. Vorrichtung (1) nach einem der Patentansprüche 1 bis 5, **dadurch gekennzeichnet, dass** die Rasthebel (26, 27) jeweils in einer quer zu der Längsachse (8) verlaufenden Ausnehmung (35, 36) im zugehörigen Keilkörper (3, 4) verschwenkbar aufgenommen sind, in die bei herunter geschwenktem Rasthebel (26, 27) das Sicherungsmittel einsteckbar ist.

7. Vorrichtung (1) nach einem der Patentansprüche 1 bis 6, **dadurch gekennzeichnet, dass** eine Unterseite (18) des Auflagers (5) zwei gegensinnig zueinander geneigte Federn (19, 20), insbesondere schwalbenschwanzförmige Federn, aufweist, die im Bereich einer Mittellinie (21) aneinander grenzen.

8. Vorrichtung (1) nach einem der Patentansprüche 1 bis 7, **dadurch gekennzeichnet, dass** in jeder Oberseite (14, 15) eines Keilkörpers (3, 4) jeweils eine geneigte Nut (16, 17), insbesondere eine schwalbenschwanzförmige Nut, eingebracht ist, wobei die Nuten (16, 17) entgegengesetzt geneigt sind und die Neigung der Nuten (16, 17) jeweils einer Neigung der Federn (19, 20) des Auflagers (5) entspricht.

9. Vorrichtung (1) nach einem der Patentansprüche 1 bis 8, **dadurch gekennzeichnet, dass** entgegengesetzte Verschiebungen der Keilkörper (3, 4) parallel zur Längsachse (8) zu einer Anhebung oder Absenkung des Auflagers (5) parallel zu einer Hochachse (13) führen.

10. Vorrichtung (1) nach einem der Patentansprüche 1 bis 9, **dadurch gekennzeichnet, dass** die Baugruppe mit dem Auflager (5) verbindbar ist.

## Claims

1. A device (1) with a base plate (2) and a bracket (5) for manual height adjustment of an assembly, in particular of a galley module in an aircraft, two opposing wedge members (3, 4) being arranged in displaceably guided manner between the base plate (2) and the bracket (5) for height adjustment purposes and the wedge members (3, 4) being capable of being secured against displacement parallel to a longitudinal axis (8) of the base plate, **characterised in that** the top (6) of the substantially rectangular base plate (2) comprises base plate toothing (24) at least in places to secure the wedge members (3, 4).

2. A device (1) according to claim 1, **characterised in that** the top (6) of the base plate (2) at least in places comprises a spring (7), in particular a dovetail spring, which may be introduced into grooves (11, 12), in particular dovetail grooves, arranged in each case in the region of bottoms (9, 10) of the wedge members (3, 4), in such a way that each wedge member (3, 4) may be displaceably guided parallel to the longitudinal axis (8) of the base plate (2).

3. A device (1) according to either one of claims 1 or 2, **characterised in that** a latching lever (26, 27) swivellable manually perpendicularly to the longitudinal axis (8) is accommodated in each wedge member (3, 4), each latching lever (26, 27) comprising latching lever toothing (30, 31) at least in places in the region of the bottom (28, 29), which toothing may be swivelled down to bring it into engagement with the base plate toothing (24) to secure the respective position of the wedge members (3, 4).

4. A device (1) according to any one of claims 1 to 3, **characterised in that** each latching lever (26, 27) is pretensioned in each case by means of a spring, in particular using a cylindrical spring (37, 38), in order to keep the respective latching lever toothing (30, 31) in engagement with the base plate toothing (24) and thus to secure the position of the wedge members (3, 4) on the base plate (2).

5. A device (1) according to any one of claims 1 to 4, **characterised in that** each latching lever (26, 27) is secured by a securing means, in particular a stopper (39, 40), against unintentional swivelling up and the penetration of dirt particles.

6. A device (1) according to any one of claims 1 to 5, **characterised in that** the latching levers (26, 27) are each accommodated swivellably in an opening (35, 36), extending transversely of the longitudinal axis (8), in the associated wedge member (3, 4), into which opening the securing means may be inserted when the latching lever (26, 27) is swivelled downwards.

7. A device (1) according to any one of claims 1 to 6, **characterised in that** a bottom (18) of the bracket (5) comprises two springs (19, 20), in particular dovetail springs, inclined in opposite directions to one another, which springs adjoin one another in the region of a centre line (21).

8. A device (1) according to any one of claims 1 to 7, **characterised in that** an inclined groove (16, 17), in particular a dovetail groove, is in each case introduced into each top (14, 15) of a wedge member (3, 4), the grooves (16, 17) being inclined in opposite directions and the inclination of the grooves (16, 17) corresponding in each case to an inclination of the springs (19, 20) of the bracket (5).

9. A device (1) according to any one of claims 1 to 8, **characterised in that** opposing displacements of the wedge members (3, 4) parallel to the longitudinal axis (8) lead to raising or lowering of the bracket (5) parallel to a vertical axis (13) .

10. A device (1) according to any one of claims 1 to 9, **characterised in that** the assembly may be joined to the bracket (5) .

## Revendications

1. Dispositif (1) doté d'une plaque de base (2) et d'un élément d'appui (5) permettant le réglage en hauteur manuel d'un sous-ensemble, en particulier d'un module de cuisine dans un aéronef, deux corps cunéiformes (3, 4) opposés destinés au réglage en hauteur étant disposés entre la plaque de base (2) et l'élément d'appui (5) de façon à pouvoir coulisser et les corps cunéiformes (3, 4) pouvant être bloqués en déplacement parallèlement à un axe longitudinal (8) de la plaque de base, **caractérisé en ce qu'**une face supérieure (6) de la plaque de base (2) sensiblement rectangulaire présente au moins par endroits une denture de plaque de base (24) permettant le blocage des corps cunéiformes (3, 4).

2. Dispositif (1) selon la revendication 1, **caractérisé en ce que** la face supérieure (6) de la plaque de base (2) présente au moins par endroits une clavette (7), en particulier une clavette en queue d'aronde, qui peut être insérée dans des rainures (11, 12) agencées dans la zone des faces inférieures (9, 10) des corps cunéiformes (3, 4), en particulier des rainures en queue d'aronde, de façon telle que chaque corps cunéiforme (3, 4) est guidé en déplacement parallèlement à l'axe longitudinal (8) de la plaque de base (2).

3. Dispositif (1) selon l'une des revendications 1 ou 2, **caractérisé en ce que** chaque corps cunéiforme (3, 4) comprend un levier à cran (26, 27) pouvant être pivoté manuellement perpendiculairement à l'axe longitudinal (8), chaque levier à cran (26, 27) présentant au moins par endroits, dans la zone d'une face inférieure (28, 29), une denture de levier à cran (30, 31) qui peut être mise en prise avec la denture de plaque de base (24) par abaissement par pivotement pour bloquer la position respective des corps cunéiformes (3, 4).

4. Dispositif (1) selon l'une des revendications 1 à 3, **caractérisé en ce que** chaque levier à cran (26, 27) est précontraint à l'aide d'un ressort cylindrique (37, 38) pour maintenir la denture de levier à cran (30, 31) respective en prise avec la denture de plaque de base (24) et par conséquent bloquer la position des corps cunéiformes (3, 4) sur la plaque de base (2).

5. Dispositif (1) selon l'une des revendications 1 à 4, **caractérisé en ce que** chaque levier à cran (26, 27) est bloqué contre tout relèvement par pivotement involontaire et toute pénétration de particules d'impuretés grâce à un moyen de blocage, en particulier un bouchon (39, 40).

6. Dispositif (1) selon l'une des revendications 1 à 5, **caractérisé en ce que** les leviers à cran (26, 27) sont chacun logés de façon pouvoir pivoter dans un évidement (35, 36) du corps cunéiforme (3, 4) correspondant s'étendant perpendiculairement à l'axe longitudinal (8), évidement dans lequel le moyen de blocage peut être inséré lorsque le levier à cran (26, 27) est abaissé par pivotement.

7. Dispositif (1) selon l'une des revendications 1 à 6, **caractérisé en ce qu'**une face inférieure (18) de l'élément d'appui (5) présente deux clavettes (19, 20) inclinées en sens contraires, en particulier des clavettes en queue d'aronde, qui sont contiguës au niveau d'une ligne médiane (21).

8. Dispositif (1) selon l'une des revendications 1 à 7, **caractérisé en ce que** dans chaque face supérieure (14, 15) d'un corps cunéiforme (3, 4) est pratiquée une rainure (16, 17) inclinée, en particulier une rainure en queue d'aronde, les rainures (16, 17) étant inclinées dans des directions opposées et l'inclinaison des rainures (16, 17) correspondant respectivement à une inclinaison des clavettes (19, 20) de l'élément d'appui (5).

9. Dispositif (1) selon l'une des revendications 1 à 8, **caractérisé en ce que** des déplacements opposés des corps cunéiformes (3, 4) parallèlement à l'axe longitudinal (8) conduisent à un soulèvement ou un abaissement de l'élément d'appui (5) parallèlement à un axe vertical (13).

10. Dispositif (1) selon l'une des revendications 1 à 9, **caractérisé en ce que** le sous-ensemble peut être relié à l'élément d'appui (5).
